# EUROPÄISCHE PATENTSCHRIFT

(11) **EP 1 529 994 B1**
(45) Veröffentlichungstag und Bekanntmachung des Hinweises auf die Patenterteilung: **03.01.2007**
(21) Anmeldenummer: 04105499.0
(22) Anmeldetag: 03.11.2004
(51) Int. Cl.: F16K 11/085

(54) **Pneumatisches Drehschieberventil mit einem scheibenartigen Strömungsleitkörper**
Pneumatic pivoting gate valve with a disc like flow guiding body
Soupape à tiroir rotatif avec un corps de guidage de l'écoulement en forme de disque

(30) Priorität: 05.11.2003 DE 10351617
(43) Veröffentlichungstag der Anmeldung: 11.05.2005
(73) Patentinhaber: Rexroth Mecman GmbH, 30880 Laatzen (DE)
(72) Erfinder: Fortmann, Norbert, 30163 Hannover (DE); Engelke, Heinz-Jürgen, 30655 Hannover (DE); Meyer, Ernst-August, 30974 Wennigsen (DE)
(74) Vertreter: Kietzmann, Lutz

(56) Entgegenhaltungen:
- DE-A1- 3 300 217
- DE-B1- 2 212 763
- US-A- 5 207 246

## Beschreibung

Die Erfindung betrifft ein pneumatisches Drehschieberventil mit einem Ventilgehäuse, das zumindest einen Speiseanschluss P, zumindest einen Arbeitsanschluss A, B und zumindest einen Entlüftungsanschluss R aufweist, die in eine Schieberbohrung einmünden, in welcher ein Drehschieber drehbar untergebracht ist, der einen Drehschaft mit mindestens einem scheibenartigen, schräg zu dessen Längsachse ausgerichteten Strömungsleitkörper zum Schalten des Druckluftflusses zwischen den Anschlüssen umfasst, von denen zwei Anschlüsse P, R einander gegenüberliegend im axialen Überstreichungsbereich des Strömungsleitkörpers in die Schieberbohrung einmünden.

Das Einsatzgebiet pneumatischer Drehschieberventile erstreckt sich insbesondere auf verschiedene Bereiche der Automatisierungstechnik, um verschiedene Arten von Druckmittelaggregaten - beispielsweise Pneumatikzylinder - mit Druckluft zu beaufschlagen. So existieren pneumatische Drehschieberventile mit unterschiedlichen Ventilfunktionen.

Aus der DE 33 00 217 A1 geht ein gattungsgemäßes pneumatisches Drehschieberventil hervor. Dieses Drehschieberventil besteht im Wesentlichen aus einem Ventilgehäuse mit einer zylindrischen Schieberbohrung, die wenigstens einen Anschluss an einer axialen Zwischenstelle zur selektiven Verbindung mit wenigstens einem weiteren Anschluss aufweist, sowie aus einem innerhalb der Schieberbohrung drehbaren Drehschieber. Der Drehschieber besteht aus einem eliptischen Strömungsleitkörper, der auf einen Drehschaft montiert ist, welcher sich axial durch die Schieberbohrung erstreckt. Der Strömungsleitkörper steht in einem abgedichteten Eingriff mit der Schieberbohrung entlang ihres Umfangs und ist schräg zu dem Drehschaft ausgerichtet, so dass diese sich über die besagte Zwischenstelle hinweg erstreckt, um die Schieberbohrung in zwei Kammerabschnitte zu unterteilen, mit denen selektiv die oder jede des jeweils einen Anschlusses in Abhängigkeit von der Stellung des Strömungsleitkörpers in Verbindung steht, während wenigstens ein weiterer Anschluss mit je einem Kammerabschnitt der Schieberbohrung in Verbindung steht, um selektiv mit wenigstens dem einen Anschluss durch Betätigung des Strömungsleitkörpers verbunden zu werden. Der Strömungsleitkörper weist eine außenradiale Doppeldichtfläche auf, die eine dazwischenliegende Ausleckzone begrenzt, welche zur Atmosphäre hin entlüftet ist. Durch diese konstruktive Maßnahme wird ein ungewolltes Überströmen von Druckluft zwischen den beiden Kammerabschnitten der Schieberbohrung vermieden.

Ein Nachteil derartiger, bekannter pneumatischer Drehschieberventile besteht jedoch darin, dass während der Drehbewegung des Drehschiebers eine Überschneidung der vom Drehschieber überstrichenen, einander gegenüberliegenden Anschlüsse erfolgt. Diese Überschneidung kann ungewollte Bewegungen des angeschlossenen Druckmittelaggregats zur Folge haben

Es ist bisher versucht worden, durch eine besonders schnelle Drehbewegung des Drehschiebers die Überschneidung zu minimieren, damit der vorstehend beschriebene nachteilige Effekt möglichst gering bleibt. Diese Maßnahme erfüllt jedoch nicht hohe Anforderungen an die Schaltcharakteristik eines pneumatischen Ventils.

Es ist daher die Aufgabe der vorliegenden Erfindung ein pneumatisches Drehschieberventil der vorstehend beschriebenen Art dahingehend weiterzuverbessem, dass mit einfachen konstruktiven Mitteln eine überschneidungsfreie Schaltcharakteristik geschaffen wird.

Die Aufgabe wird ausgehend von einem pneumatischen Drehschieberventil gemäß dem Oberbegriff des Anspruchs 1 in Verbindung mit dessen kennzeichnenden Merkmalen gelöst. Die nachfolgenden abhängigen Ansprüche geben vorteilhafte Weiterbildungen der Erfindung wieder.

Die Erfindung schließt die technische Lehre ein, dass ein scheibenartiger Strömungsleitkörper des Drehschiebers aus einem Scheibengrundteil besteht, an dessen sich im Bereich der maximalen Schrägstellung relativ zur Längsachse des Drehschafts gegenüberliegenden Randbereichen je eine sich axial erstreckende Anformung mit einer im Wesentlichen ovalen Außenseite vorgesehen ist, um ein überschneidungsfreies Schalten des Druckluftflusses zu gewährleisten. Der Vorteil der erfindungsgemäßen Lösung liegt insbesondere darin, dass lediglich eine konstruktive Modifikation des Strömungsleitkörpers zum gewünschten Erfolg führt. Der erfindungsgemäß ausgebildete Strömungsleitkörper ist einfach zu fertigen, wobei sonstige Modifikationen seitens des Ventilgehäuses nicht erforderlich sind. Es wird im Prinzip durch eine die gegenüberliegenden Anschlüsse in ihrer jeweiligen Querschnittsform umschließende Dichtkontur geschaffen, die bei der Drehbewegung die Schieberbohrung stets in zwei Kammerabschnitte unterteilt.

Vorzugsweise besteht das Scheibengrundteil samt der beidseitigen Anformungen aus einem Elastomermaterial, so dass dieses einstückig ausgeführt ist. Es ist auch denkbar, den Strömungsleitkörper mit beidseitigen Schafftabschnitten zu versehen, um eine Befestigung am Drehschaft zu ermöglichen. In diesem Falle besteht der Strömungsleitkörper aus dem Scheibengrundteil mit Anformungen und beidseitigen Schaftabschnitten.

Alternativ hierzu ist es auch möglich, dass Scheibengrundteil samt den beidseitigen Anformungen aus Kunststoff oder Metall herzustellen, wobei in diesem Falle jedoch eine außenradiale Formdichtung zur dynamischen Abdichtung gegenüber der Innenwandung der Schieberbohrung vorzusehen ist.

Der Drehschaft des Drehschiebers besteht vorzugsweise aus einem ersten Drehschaftteil und einem koaxialen zweiten Drehschaftteil, wobei der Strömungsleitkörper dazwischen angeordnet und gehalten ist. Ein derartiger Aufbau gestattet sowohl eine günstige Fertigung als auch eine einfache Montage der Einzelteile zur Bildung des Drehschiebers.

Gemäß einer die Erfindung verbessernden Maßnahme ist der Strömungsleitkörper über die beidseitigen koaxialen Schaftabschnitte am Scheibengrundteil zwischen beiden Drehschaftteilen gehalten. Dies kann beispielsweise durch Einpressen eines koaxialen stiftartigen Ansatzes seitens beider Drehschaftteile in eine korrespondierende koaxiale Bohrung eines durch die Schaftabschnitte des Strömungsleitkörpers gebildeten Hülse erfolgen.

Falls der Strömungsleitkörper nicht mit den beidseitigen Schaftabschnitten versehen ist, so kann der Strömungsleitkörper auch über die beidseitigen koaxialen Drehschaftteile über hier vorgesehene tellerförmige Endbereiche gehalten werden, wobei die Endbereiche direkt beidseits des Scheibengrundteils zur Anlage kommen.

Zur Minimierung der Reibung zwischen dem Strömungsleitkörper und der korrespondierenden Innenwandung der Schieberbohrung kann die ovale Außenseite von einem sich nach radial außen erstreckenden und an der Schieberbohrung anliegenden Dichtrand umgeben sein. Somit wird eine vollflächige Anlage der Außenseite des Strömungsleitkörpers an der Schieberbohrung vermieden.

Vorzugsweise ist das Ventilgehäuse zur Bildung eines 4/2- oder 4/3- Wegeventils mit einem zentralen Speisedruckanschluss P und einem gegenüberliegend in die Schieberbohrung einmündenden zentralen Entlüftungsanschluss R ausgestattet, wobei je ein Arbeitsanschluss A, B beidseits der zentralen Anschlüsse P, R angeordnet ist. Zur Bildung eines 3/2-Wegeventils kann der zentrale Speiseanschluss P mit dem gegenüberliegend einmündenden zentralen Entlüftungsanschluss R vorgesehen werden, wobei der Arbeitsanschluss A benachbart zu den zentralen Anschlüssen P, R angeordnet ist.

Weitere die Erfindung verbessernde Maßnahmen werden nachstehend gemeinsam mit der Beschreibung eines bevorzugten Ausführungsbeispiels zur Erfindung anhand der Figuren näher dargestellt. Es zeigt:
- Fig.1: einen Längsschnitt durch ein pneumatisches Drehschieberventil mit einem überschneidungsfreien Strömungsleitkörper,
- Fig.2: ein Längsschnitt gemäß Fig.1, wobei ein weiterer Schnitt längs durch den Strömungsleitkörper geführt ist und
- Fig.3: eine perspektivische Darstellung des Strömungsleitkörpers nach Fig.1.

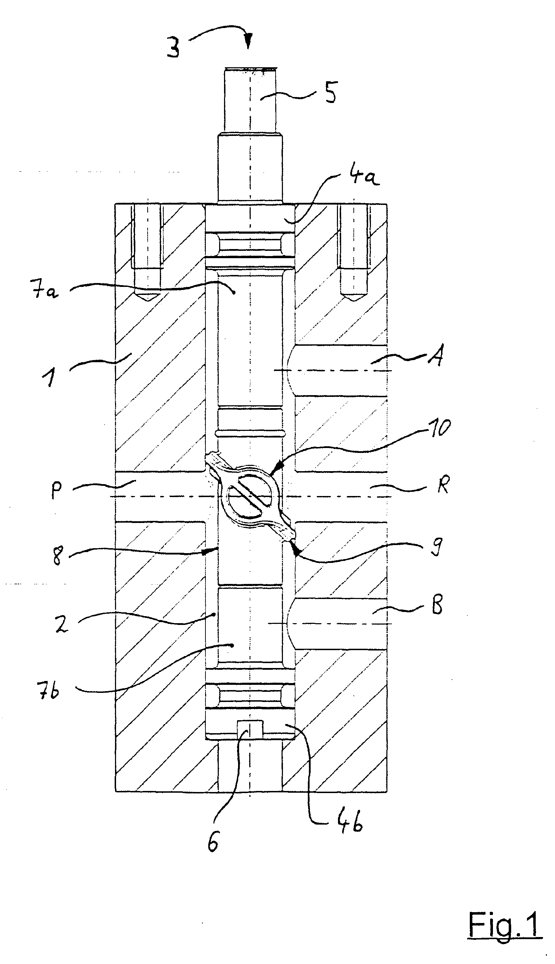

Das pneumatische Drehschieberventil nach Fig.1 besitzt eine 4/2- Ventilfunktion und umfasst daher ein Ventilgehäuse 1, welches einen zentralen Speiseanschluss P, ein ebenfalls zentralen Entlüftungsanschluss R sowie zwei axial hierin beabstandete Arbeitsanschlüsse A, B aufweist. Alle Anschlüsse A, B, P, R münden innerhalb des Ventilgehäuses 1 in eine dort eingebrachte Schieberbohrung 2 ein. Die Schieberbohrung 2 dient der Aufnahme eines Drehschiebers 3, der hierin drehbar über Führungsabschnitte 4a, 4b beidseits des Drehschiebers 3 gelagert ist. Der Drehschieber 3 ist über einen aus dem Ventilgehäuse 1 hinausragenden Zapfen 5 zur Betätigung verdrehbar gelagert. Am gegenüberliegenden Ende des Drehschiebers 3 ist eine Aufnahme 6 für ein - nicht weiter dargestelltes - Werkzeug zur Handhilfsbetätigung vorgesehen.

Der Drehschieber 3 besteht im Wesentlichen aus einem Drehschaft 7, an dem ein scheibenartiges, schräg zur Längsachse des Drehschafts 7 ausgerichteter Strömungsleitkörper 8 angebracht ist. Der Strömungsleitkörper 8 dient dem Schalten des Druckluftflusses zwischen den Anschlüssen A, P oder R sowie B, P oder R in Folge Drehung des Drehschiebers 3.

Der Strömungsleitkörper 8 besitzt ein Scheibengrundteil 9, an dem zwei einander gegenüberliegende Anformungen 10 (davon hier nur eine sichtbar) vorgesehen sind. Die Anformungen 10 sind im Bereich der maximalen Schrägstellung relativ zur Längsachse des Drehschafts 3 platziert und bilden eine ovale Außenseite - hier die Spezialform eines Kreises - womit ein überschneidungsfreies Schalten des Druckluftflusses bei der Betätigung des Drehschiebers 3, d.h. bei einer Verdrehung um 180° gewährleistet ist. Die Anformung 10 gewährleistet eine den Speiseanschluss P sowie den Entlüftungsanschluss R in der jeweiligen Form umschließende Dichtkontur, so dass die beiden durch den Strömungsleitkörper 8 gebildeten Kammern der Schieberbohrung 2 selbst während der Drehbewegung völlig voneinander getrennt bleiben.

Der Drehschaft 7 ist hier aus einem ersten Drehschaftteil 7a mit Zapfen 5 sowie einem koaxialen, zweiten Drehschaftteil 7b mit Aufnahme 6 gebildet, wobei der Strömungsleitkörper 8 dazwischen angeordnet und gehalten ist.

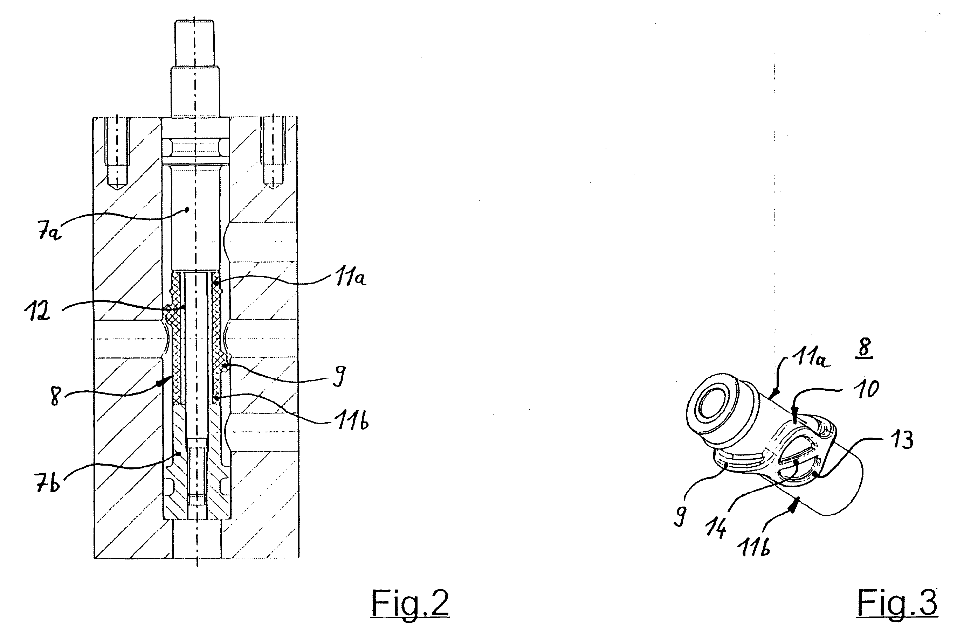

Gemäß Fig.2 ist der - hier geschnitten dargestellte - Strömungsleitkörper 8 mit beidseits des Scheibengrundteils 9 angeformten Schaftabschnitten 11a, 11b versehen. Beide Drehschaftteile 7a, 7b sind durch Einpressen eines koaxialen stiftartigen Ansatzes 12 in eine korrespondierende Bohrung des Strömungsleitkörpers 8 miteinander zur Bildung des Drehschiebers 3 verbunden.

Der in der Fig.3 separat dargestellte Strömungsleitkörper 8 mit den beiden hülsenförmigen Schaftabschnitten 11a und 11b und dem dazwischenliegenden Scheibengrundteil 9 samt Anformungen 10 besteht insgesamt aus einem Elastomermaterial, um die Dichtwirkung gegenüber der - hier nicht weiter dargestellten - Schieberbohrung des pneumatischen Schieberventils sicherzustellen. Zur Minimierung der Reibung zwischen dem Strömungsleitkörper 8 und der korrespondierenden Innenwandung der Schieberbohrung ist die hier in der Spezialform eines Kreises vorhandene ovale Außenseite von einer sich nach radial außen erstreckenden und an der Schieberbohrung anliegenden Dichtwand 12 umgeben. Der freibleibende Innenbereich minimiert die Gleitreibung.

Die Erfindung ist nicht beschränkt auf das vorstehend beschriebene bevorzugte Ausführungsbeispiel. Es sind vielmehr auch Abwandlungen hiervon denkbar, welche in dem Schutzbereich der nachfolgenden Ansprüche liegen. So ist es beispielsweise auch möglich, ein pneumatisches Drehschieberventil mit 3/2- Ventilfunktion und anderen Ventilfunktionen mit dem erfindungsgemäß ausgebildeten Strömungsleitkörper zum überschneidungsfreien Schalten des Druckmittelflusses auszustatten. Weiterhin ist es auch denkbar, einen Drehschieber mit mehreren axial beabstandeten, erfindungsgemäßen Strömungsleitkörpern auszustatten, um entsprechende Mehrfach-Ventilfunktionen zu realisieren.

### Bezugszeichenliste

- **1**: Ventilgehäuse
- **2**: Schieberbohrung
- **3**: Drehschieber
- **4**: Führungsabschnitt
- **5**: Zapfen
- **6**: Aufnahme
- **7**: Drehschaft
- **8**: Strömungsleitkörper
- **9**: Scheibengrundteil
- **10**: Anformung
- **11**: Schaftabschnitt
- **12**: Ansatz
- **13**: Dichtrand
- **14**: Quersteg

## Patentansprüche

1. Pneumatisches Drehschieberventil mit einem Ventilgehäuse (1), das zumindest einen Speiseanschluss (P), zumindest einen Arbeitsanschluss (A, B) und zumindest einen Entlüftungsanschluss (R) aufweist, die in eine Schieberbohrung (2) einmünden, in welcher ein Drehschieber (3) drehbar untergebracht ist, der einen Drehschaft (7) mit mindestens einem scheibenartigen, schräg zu dessen Längsachse ausgerichteten Strömungsleitkörper (8) zum Schalten des Druckluftflusses zwischen den Anschlüssen umfasst, von denen zwei Anschlüsse (P, R) einander gegenüberliegend im axialen Überstreichungsbereich des Strömungsleitkörpes (8) in die Schieberbohrung (2) einmünden, wobei der Strömungsleitkörper (8) ein Scheibengrundteil (9) besitzt, **dadurch gekennzeichnet, dass** am Strömungsleitkörper im Bereich der maximalen Schrägstellung relativ zur Längsachse des Drehschafts (7) gegenüberliegenden Randbereichen je eine sich axial erstreckende Anformung (10) mit einer im wesentlichen ovalen Außenseite vorgesehen ist, um ein überschneidungsfreies Schalten des Druckluftflusses zu gewährleisten.

2. Pneumatisches Drehschieberventil nach Anspruch 1,
**dadurch gekennzeichnet, dass** das Scheibengrundteil (9) samt den beidseitigen Anformungen (10) als ein aus einem Elastomermaterial bestehendes, einstückiges Bauteil ausgeführt ist.

3. Pneumatisches Drehschieberventil nach Anspruch 1,
**dadurch gekennzeichnet, dass** das Scheibengrundteil (9) samt den beidseitigen Anformungen (10) aus Kunststoff oder Metall besteht, wobei eine außenradiale Formdichtung zur dynamischen Abdichtung gegenüber der Schieberbohrung (2) vorgesehen ist.

4. Pneumatisches Drehschieberventil nach Anspruch 1,
**dadurch gekennzeichnet, dass** der Drehschaft (7) aus einem ersten Drehschaftteil (7a) und einem koaxialen zweiten Drehschaftteil (7b) besteht, wobei der Strömungsleitkörper (8) dazwischen angeordnet und gehalten ist.

5. Pneumatisches Drehschieberventil nach Anspruch 4,
**dadurch gekennzeichnet, dass** der Strömungsleitkörper (8) mit beidseits des Scheibengrundteils (9) angeformten Schaftabschnitten (11a, 11b) versehen ist, die mit beiden Drehschaftteilen (7a, 7b) korrespondieren.

6. Pneumatisches Drehschieberventil nach Anspruch 5,
**dadurch gekennzeichnet, dass** beide Drehschaftteile (7a, 7b) durch Einpressen eines koaxialen stiftartigen Ansatzes (12) in eine korrespondierende Bohrung des Strömungsleitkörpers (8) miteinander zur Bildung des Drehschiebers (3) verbunden sind.

7. Pneumatisches Drehschieberventil nach Anspruch 4,
**dadurch gekennzeichnet, dass** zum Fixieren des Strömungsleitkörpers (8) beide Drehschaftteile (7a, 7b) über einen tellerförmigen Endbereich beidseits des Scheibengrundteils (9) zur Anlage kommen.

8. Pneumatisches Drehschieberventil nach Anspruch 1,
**dadurch gekennzeichnet, dass** zur Minimierung der Reibung zwischen dem Strömungsleitkörper (8) und der korrespondierenden Innenwandung der Schieberbohrung (2) die ovale Außenseite von einem sich nach radial außen erstreckenden und an der Schieberbohrung (2) anliegenden Dichtrand (13) umgeben ist.

9. Pneumatisches Drehschieberventil nach einem der vorstehenden Ansprüche,
**dadurch gekennzeichnet, dass** das Ventilgehäuse (1) zur Bildung eines 4/2- oder 4/3-Wegeventils einen zentralen Speiseanschluss (P) und einen gegenüberliegend in die Schieberbohrung (2) einmündenden, zentralen Entlüftungsanschluss (R) aufweist, wobei je ein Arbeitsanschluss (A, B) beidseits der zentralen Anschlüsse (P, R) angeordnet ist.

10. Pneumatisches Drehschieberventil nach einem der vorstehenden Ansprüche,
**dadurch gekennzeichnet, dass** das Ventilgehäuse (1) zur Bildung eines 3/2-Wegeventils einen zentralen Speiseanschluss (P) und einen gegenüberliegend in die Schieberbohrung (2) einmündenden, zentralen Entlüftungsanschluss (R) aufweist, wobei ein Arbeitsanschluss (A) benachbart zu den zentralen Anschlüssen (P, R) angeordnet ist.

## Claims

1. A pneumatic rotary slide valve with a valve housing (1) comprising at least one feeding port (P), at least one working port (A, B) and at least one venting port (R), which open out into a slide bore (2) in which a rotary slide (3) is accommodated in a rotating manner, comprising a rotary shaft (7) having, at an oblique angle to its longitudinal axis, at least one disk-like flow guiding body (8) to switch the pressurized-air flow between the ports, wherein two ports (P, R) open out into the slide bore (2) opposite each other in the axial sweep area of said flow guiding body (8), wherein
said flow guiding body (8) has a disk base portion (9)
**characterised in that** an axially extending protrusion (10) with an essentially oval-shaped outer surface is provided at border areas opposite each other across the longitudinal axis of the rotary shaft (7) at the flow guiding body in the area of the maximal oblique angled position in order to ensure smooth switching of the pressurized-air flow.

2. The pneumatic rotary slide valve according to claim 1,
**characterised in that** said disk base portion (9) together with the protrusions (10) on either side is formed as a one-piece component of an elastomeric material.

3. The pneumatic rotary slide valve according to claim 1,
**characterised in that** said disk base portion (9) together with the protrusions (10) on either side is of plastic or metal, wherein a shaped seal is provided radially on the outside to provide for dynamic sealing with respect to the slide bore (2).

4. The pneumatic rotary slide valve according to claim 1,
**characterised in that** said rotary shaft (7) is comprised of a first rotary shaft portion (7a) and a coaxial second rotary shaft portion (7b), between which said flow guiding body (8) is arranged and supported.

5. The pneumatic rotary slide valve according to claim 4,
**characterised in that** said flow guiding body (8) is provided with shaft sections (11a, 11b) contiguously formed on either side of said disk base portion (9) and corresponding to the two rotary shaft portions (7a, 7b).

6. The pneumatic rotary slide valve according to claim 5,
**characterised in that** the two rotary shaft portions (7a, 7b) are connected with each other to form the rotary slide (3) by forcing a coaxial pin-like stud (12) into a corresponding bore of the flow guiding body (8).

7. The pneumatic rotary slide valve according to claim 4,
**characterised in that**, for fixing the flow guiding body (8), the two rotary shaft portions (7a, 7b) contact the disk base portion (9) on either side via a platelike end area.

8. The pneumatic rotary slide valve according to claim 1,
**characterised in that** to minimize friction between the flow guiding body (8) and the corresponding inner wall of the slide bore (2), the oval outer surface is surrounded by a sealing edge (13) extending radially outwardly and contacting the slide bore (2).

9. The pneumatic rotary slide valve according to any one of the preceding claims,
**characterised in that** the valve housing (1) has a central feeding port (P) and a central venting port (R) opening out into the slide bore (2) at opposite positions to form a four-way, two-position or four-way, three-position directional control valve, wherein one working port (A, B) is arranged on each side of the central ports (P, R).

10. The pneumatic rotary slide valve according to any one of the preceding claims,
**characterised in that** said valve housing (1) has a central feeding port (P) and a central venting port (R) opening out into the slide bore (2) at opposite positions to form a three-way, two-position directional control valve, wherein one working port (A) is arranged adjacent to the central ports (P, R).

## Revendications

1. Valve pneumatique à tiroir rotatif pourvu d'un boîtier de valve (1), qui comprend au moins un raccord d'alimentation (P), au moins un raccord de travail (A, B) et au moins un raccord de mise à l'air (R) qui débouchent dans un perçage à tiroir (2) dans lequel est logé avec faculté de rotation un tiroir rotatif (3) qui comprend une tige de rotation (7) pourvue d'au moins un corps de guidage d'écoulement (8) en forme de disque, orienté en oblique par rapport à son axe longitudinal et destiné à commuter le flux d'air comprimé entre les raccords dont deux raccords (P, R) débouchent dans le perçage à tiroir (2) au niveau de la zone de balayage axiale du corps de guidage d'écoulement (8) en étant opposés l'un à l'autre, valve dans laquelle le corps de guidage d'écoulement (8) possède une partie de base (9) en disque, **caractérisée en ce qu'**il est prévu, sur le corps de guidage d'écoulement, dans des zones de bord opposées au niveau de la position oblique maximale par rapport à l'axe longitudinal de la tige de rotation (7), une conformation respective (10) s'étendant axialement et pourvue d'une face extérieure sensiblement ovale pour assurer une commutation exempte d'intersection pour le flux d'air comprimé.

2. Valve pneumatique à tiroir rotatif selon la revendication 1, **caractérisée en ce que** la partie de base (9) en disque, y compris les conformations bilatérales (10), est réalisée sous la forme d'un composant d'un seul tenant constitué d'un matériau élastomère.

3. Valve pneumatique à tiroir rotatif selon la revendication 1, **caractérisée en ce que** la partie de base (9) en disque, y compris les conformations bilatérales (10), est constituée de matière plastique ou de métal, un joint conformé radialement extérieur étant prévu pour l'étanchement dynamique par rapport au perçage à tiroir (2).

4. Valve pneumatique à tiroir rotatif selon la revendication 1, **caractérisée en ce que** la tige de rotation (7) est constituée par une première partie de tige de rotation (7a) et par une seconde partie de tige de rotation (7b) coaxiale, le corps de guidage d'écoulement (8) étant agencé et retenu entre les deux parties.

5. Valve pneumatique à tiroir rotatif selon la revendication 4, **caractérisée en ce que** le corps de guidage d'écoulement (8) est pourvu de tronçons de tige (11a, 11 b) conformés de part et d'autre de la partie de base (9) en disque, qui correspondent avec les deux parties de tige de rotation (7a, 7b).

6. Valve pneumatique à tiroir rotatif selon la revendication 5, **caractérisée en ce que** les deux parties de tige de rotation (7a, 7b) sont reliées l'une à l'autre par emmanchement à la presse d'un talon coaxial (12) en forme de goupille dans un perçage correspondant du corps de guidage d'écoulement (8), en vue de former le tiroir rotatif (3).

7. Valve pneumatique à tiroir rotatif selon la revendication 4, **caractérisée en ce que** pour fixer le corps de guidage d'écoulement (8), les deux parties de tige de rotation (7a, 7b) viennent en appui de part et d'autre de la partie de base (9) en disque via une zone d'extrémité en forme d'assiette.

8. Valve pneumatique à tiroir rotatif selon la revendication 1, **caractérisée en ce que** pour minimiser la friction entre le corps de guidage d'écoulement (8) et la paroi intérieure correspondante du perçage à tiroir (2), la face extérieure ovale est entourée par un bord d'étanchement (13) qui s'étend radialement vers l'extérieur et qui s'applique contre le perçage à tiroir (2).

9. Valve pneumatique à tiroir rotatif selon l'une des revendications précédentes, **caractérisée en ce que** pour former un distributeur à 4 voies/2 positions ou à 4 voies/3 positions, le boîtier de valve (1) comprend un raccord d'alimentation central (P) et un raccord de mise à l'air (R) central débouchant à l'opposé dans le perçage à tiroir (2), un raccord de travail (A, B) respectif étant agencé de part et d'autre des raccords centraux (P, R).

10. Valve pneumatique à tiroir rotatif selon l'une des revendications précédentes, **caractérisée en ce que** pour former un distributeur à 3 voies/2 positions, le boîtier de valve (1) comprend un raccord d'alimentation central (P) et un raccord de mise à l'air (R) central débouchant à l'opposé dans le perçage à tiroir (2), un raccord de travail (A) étant agencé au voisinage des raccords centraux (P, R).
